# EUROPÄISCHE PATENTSCHRIFT

(11) **EP 1 386 070 B1**
(45) Veröffentlichungstag und Bekanntmachung des Hinweises auf die Patenterteilung: **16.08.2006**
(21) Anmeldenummer: 02737821.5
(22) Anmeldetag: 29.04.2002
(51) Int. Cl.: F02C 7/18

(54) **VERFAHREN ZUR KÜHLUNG EINER GASTURBINE UND GASTURBINENANLAGE**
METHOD FOR COOLING A GAS TURBINE AND GAS TURBINE INSTALLATION
PROCEDE DE REFROIDISSEMENT D'UNE TURBINE A GAZ, ET INSTALLATION DE TURBINE A GAZ

(30) Priorität: 10.05.2001 DE 10122695
(43) Veröffentlichungstag der Anmeldung: 04.02.2004
(73) Patentinhaber: SIEMENS AKTIENGESELLSCHAFT, 80333 München (DE)
(72) Erfinder: REISSIG, Sergej, 91058 Erlangen (DE)
(86) Internationale Anmeldenummer: PCT/DE2002/001559
(87) Internationale Veröffentlichungsnummer: WO 2002/090741

(56) Entgegenhaltungen:
- DE-A- 2 835 903
- DE-A- 4 344 857
- GB-A- 1 453 611
- US-A- 2 477 931
- US-A- 2 487 842
- US-A- 2 970 437
- US-A- 5 161 365
- US-A- 5 414 992

## Beschreibung

Die Erfindung betrifft ein Verfahren zur Kühlung einer Gasturbine, bei dem einem der Gasturbine vorgeschalteten Verdichter verdichtete Luft entnommen und der Gasturbine als Kühlluft zugeführt wird. Die Erfindung betrifft weiterhin eine Gasturbinenanlage mit einer Gasturbine und einem der Gasturbine vorgeschalteten Verdichter, wobei von dem Verdichter mindestens eine Kühlluftleitung.abzweigt, über die dem Verdichter verdichtete Luft entnehmbar und der Gasturbine als Kühlluft zuführbar ist.

In einer Strömungsmaschine, beispielsweise in einer Gasturbine, wird durch ein strömendes heißes Aktionsfluid, z.B. ein Heißgas, infolge von dessen Expansion Nutzarbeit gewonnen. Im Hinblick auf die Erhöhung des Wirkungsgrades einer Strömungsmaschine wird u.a. versucht eine möglichst hohe Temperatur des heißen Aktionsfluids zu erreichen. Die dem heißen Aktionsfluid unmittelbar ausgesetzten Bauteile sind daher thermisch besonders stark belastet. Im Falle einer Gasturbine betrifft dies z.B. die Beschaufelung in der Turbine (Leitschaufeln und Laufschaufeln) sowie die den Raum mit dem strömenden heißen Aktionsfluid begrenzenden Wandelemente der Turbine. Es kommt also darauf an für diese Bauteile geeignete Werkstoffe zu finden, die bei möglichst hohen Temperaturen ausreichende Festigkeit besitzen sowie Verfahren zu entwickeln, mit denen eine Kühlung dieser Bauteile möglich ist, um die hohen Temperaturen anwenden zu können. In einer Gasturbine wird das zur Kühlung erforderlich Kühlmittel üblicherweise einem an die Turbine angekoppelten Verdichter als Kühlluft entnommen. Dabei wird die Kühlluft von einer Stufe des Verdichters mit entsprechendem Druck und entsprechender Temperatur abgezweigt und den kritischen zu kühlenden Bereichen der Gasturbine zugeführt. Um den mit dieser Kühlluftentnahme einhergehenden Wirkungsgradverlust so gering wie möglich zu halten, wird intensiv an Kühlkonzepten gesucht, die einen möglichst effizienten Kühlmitteleinsatz gewährleisten.

In der US-PS-4,642,024 ist eine kühlbare Statorgruppe für ein Gasturbinentriebwerk beschrieben. Die Statorgruppe weist eine äußere Luftabdichtung sowie einen stromaufwärtigen Halter und einen stromabwärtigen Halter auf. Die Halter stützen die äu-ßere Luftabdichtung mit Hilfe von Verhakungen über einen Strömungsweg für Arbeitsmedium ab. Dadurch ist eine konstruktive Dreiteilung der Luftabdichtung in einen stromabwärtigen und stromaufwärtigen Randbereich sowie einen zwischen den Randbereichen angeordneten Zentralbereich gegeben. Zur Kühlung der äußeren Luftabdichtung mit Kühlluft erfolgt zunächst eine Prallkühlung im Zentralbereich. Die Kühlluft wird dabei dem Verdichter des Gasturbinentriebwerks abgezweigt. Die Randbereiche, die aufgrund der Halter nicht direkt mit Kühlluft beaufschlagbar sind, werden gekühlt, indem ein Teil der gesammelten Kühlluft durch die Halter hindurch geleitet wird um eine Prallkühlung der Randbereiche zu ermöglichen. Dazu erstrecken sich Dosierlöcher durch die Halter, um die Kühlluft in den stromaufwärtigen und den stromabwärtigen Randbereich der selben äußeren Luftabdichtung zu.leiten.

Aus der DE 197 33 148 C1 geht eine Kühlvorrichtung zur Kühlung einer ersten Stufe einer Gasturbine mit einer ersten Leitschaufel und einer ersten Laufschaufel mittels Kühlluft hervor. Die erste Leitschaufel weist eine Plattform auf, die ein Wandelement darstellt, welches den Strömungskanal mit einem heißen Aktionsfluid, d.h. dem Heißgas begrenzt. An der Plattform der ersten Leitschaufel befindet sich eine erste Kammer sowie eine in Strömungsrichtung daran angrenzende zweite Kammer. Zwischen diesen beiden Kammern ist eine Wand angeordnet, die in die Plattform der Leitschaufel eingesetzt ist. Von einer ersten Kühlluftversorgung wird die erste Kammer über eine erste Kühlluftzuführung mit einem ersten Kühlluftstrom versorgt. Der erste Kühlluftstrom wird durch die Plattform hindurch geführt und über die erste Stufe der Gasturbine in den Strömungskanal ausgelassen. Entsprechend wird die zweite Kammer mit einer zweiten Kühlluftversorgung mittels einer zweiten Kühlluftzuführung mit einem zweiten Kühlluftstrom versorgt, welche anschließend durch die Plattform in die erste Stufe in den Strömungskanal ausgelassen wird. Dabei wird die erste Kühlluftversorgung mit Verdichterendluft mit einem ersten Druck betrieben, die zweite Kühlluftversorgung mit Verdichterluft mit einem zweiten Druck aus einer geeigneten Entnahme aus dem Verdichter, wobei der zweite Druck geringer ist als der erste Druck. Auf diese Weise wird die Leitschaufel mit unabhängigen Kühlmittelströmen mit unterschiedlichem Druck beaufschlagt und gekühlt.

In der WO 00/60219 ist eine Strömurigsmaschine, insbesondere eine Gasturbine, mit einer kühlbaren Anordnung mit einem ersten Wandelement und mit einem axial an das erste Wandelement angrenzenden zweiten Wandelement beschrieben. Weiterhin ist ein Verfahren zur Kühlung einer Anordnung in einer Strömungsmaschine mit einem ersten Wandelement und mit einem an das erste Wandelement angrenzenden zweiten Wandelement beschrieben, wobei die Wandelemente mit einem Kühlmittel, insbesondere mit Kühlluft aus einem Verdichter, beaufschlagt werden. Das Kühlmittel wird nach der Prallkühlung des ersten Wandelements zur Kühlung des zweiten Wandelements weiter verwendet. Hierdurch ergibt sich insbesondere der Vorteil einer Mehrfachnutzung des Kühlmittels zur Kühlung verschiedener Wandelemente, was den Kühlmitteleinsatz in einer Gasturbine reduziert. In der US-A-5 414 992 ist ein Verfahren offenbart, wie es im Oberbegriff von Anspruch 1 beschrieben ist.

Aufgabe der Erfindung ist es ein Verfahren zur Kühlung einer Gasturbine anzugeben, das gegenüber den bisher bekannten Kühlverfahren eine Steigerung der Kühleffizienz und damit des Wirkungsgrades der Gasturbine ermöglicht. Eine weitere Aufgäbe der Erfindung besteht darin, eine Gasturbinenanlage anzugeben, die insbesondere die Durchführung des Kühlverfahrens ermöglicht.

Die erstgenannte Aufgabe wird erfindungsgemäß gelöst durch ein Verfahren zur Kühlung einer Gasturbine, gemäß Anspruch 1.

Die Erfindung geht bereits von der Erkenntnis aus, dass die bisher üblichen Verfahren zur Kühlung einer Gasturbine Nachteile im Hinblick auf die Kühleffizienz bei Einsatz von Entnahmeluft aus dem Verdichter zur Kühlung der thermisch hoch belasteten Bauteile der Gasturbine aufweisen. Beim Betrieb einer Gasturbine müssen insbesondere die Schaufeln und die Brennkammer der Gasturbine gekühlt werden. Die Temperatur der für die Kühlung notwendigen Kühlluft hat einen Wert, der gemäß dem Verdichtungsprozess eingestellt wird. In der Regel beträgt sie in Abhängigkeit vom Gasturbinenchip ca. 330 bis 420 ° C. Die Verdichterentnahmeluft wird also mit einer vergleichsweise hohen Temperatur als Kühlluft zur Kühlung der kritischen Bereiche der Gasturbine verwendet. Weiterhin ist durch die Entnahme der Kühlluft aus dem Verdichter der Gasmassenstrom vor der Turbine reduziert, wodurch der Wirkungsgrad der Gasturbine entsprechend geringer ausfällt. Um höhere Wirkungsgrade erreichen zu können, muss in der Regel die Turbineneintrittstemperatur der heißen Gase erhöht werden. Die Anhebung der Gastemperatur vor der Gasturbine erfordert größere Mengen von Kühlluft. Um infolgedessen die Wirkungsgradeinbuße hinzuhalten, müssen die Kühlvorgänge verbessert bzw. optimiert werden.

Mit der Erfindung wird nun ein völlig anderer Weg beschritten, um die Kühlung einer Gasturbine zu verbessern, um dadurch einen höheren Wirkungsgrad der Gasturbine zu erreichen. Es wird dadurch erreicht, dass die dem Verdichter entnommene verdichtete Luft, die zur Kühlung als Kühlluft der Gasturbine zugeführt wird, nicht wie bisher üblich mit vergleichsweise hohen Temperaturen eingesetzt wird. Vielmehr wird die verdichtete Luft nach der Entnahme aus dem Verdichter abgekühlt. Die Abkühlung erfolgt hierbei im Wärmetausch mit einem Luftstrom. Die im Wärmetausch abgekühlte verdichtete Luft wird danach der Gasturbine zur Kühlung zugeführt. Die gegenüber den üblichen Kühlverfahren wesentlich niedrigere Temperatur der Kühlluft ermöglicht vorteilhafter Weise entweder die Menge von Kühlluft, d.h. den Kühlluftmassenstrom zu reduzieren oder die Turbineneintrittstemperatur des die Turbine antreibenden Heißgases zu erhöhen. Beide Maßnahmen führen zu einer Wirkungsgradsteigerung der Gasturbine, wobei eine Steigerung um mehr als 1 % erreichbar ist.

Vorzugsweise wird dabei der Luftstrom strömungstechnisch unabhängig von der verdichteten Luft geführt. Sowohl der Luftstrom als auch der Strom verdichteter Luft, der dem Verdichter entnommen ist, können somit separat voneinander geführt und ihr Massenstrom eingestellt werden. Beim Wärmetausch liegt somit ein Luft-Luft-Wärmetausch vor, wobei beim Wärmetauschprozess die verdichtete Luft mit dem Luftstrom wechselwirkt. Hierdurch wird die verdichtete Luft aus dem Verdichter abgekühlt und der Luftstrom entsprechend aufgewärmt.

Vorzugsweise wird die verdichtete Luft im Wärmetausch um 120 °C bis 150 °C, insbesondere auf 130 °C bis 140 °C abgekühlt. Die derart abgekühlt verdichtete Luft wird als Kühlluft zur Kühlung der Gasturbine eingesetzt, wobei gegenüber den herkömmlichen Kühlverfahren eine deutlich reduzierte Temperatur der Kühlluft vorgesehen ist. Durch die.vergleichsweise niedrige Temperatur der Kühlluft kann diese mehr Wärme bei der Beaufschlagung der thermisch hoch belasteten Bauteile der Gasturbine aufnehmen und aus der Gasturbine ableiten. Bezogen auf den eingesetzten Kühlluftmassenstrom wird dem nach vorteilhafter Weise eine gesteigerte Kühleffizienz erreicht.

Bevorzugt wird für den Wärmetausch ein Luftstrom mit einer Temperatur von 90 ° C bis 115 °C, insbesondere von 100 °C bis 110 °C eingesetzt.

Weiter bevorzugt wird für den Wärmetausch ein Luftstrom mit einem Maximaldruck von 2 bar bis 3 bar, insbesondere von 2 bar bis 2,5 bar verwendet. Der Luftstrom kann hinsichtlich der Temperatur und des Druckes eingestellt werden, so dass sich im Wärmetausch mit der verdichteten Luft eine vorgebbare Abkühlung der verdichteten Luft und somit die Temperatur der Kühlluft einstellen lässt. Der Luftstrom kann beispielsweise einem unabhängig vom Verdichter der Gasturbine vorzusehenden Luftverdichter an einer geeigneten Stufe des Luftverdichters entnommen werden.

In einer besonders bevorzugten Ausgestaltung wird der beim Wärmetausch aufgewärmt Luftstrom einer Luftturbine zugeführt und dort arbeitsleistend entspannt. Die Energie des im Wärmetausch aufgewärmten Luftstroms kann hierdurch sehr vorteilhaft zur weiteren Energieerzeugung ausgenutzt werden. Die Luftturbine kann dabei an einen Generator angekoppelt werden, so dass zusätzlich elektrische Energie erzeugbar ist. Die Luftturbine kann zugleich dafür eingesetzt werden, den Luftverdichter, aus dem der Luftstrom zur Abkühlung der verdichteten Luft entnommen wird, anzutreiben. In dieser besonders vorteilhaften Ausgestaltung des Kühlverfahrens wird die im Wärmetauschprozess gewonnene Abwärme aus der Abkühlung der verdichteten Luft zur weiteren Gewinnung von Nutzenergie verwendet. In dem Wärmetauschprozess wird die verdichtete Luft abgekühlt und der Luftstrom der Luftturbine aufgewärmt. Der derart aufgewärmte Luftstrom wird der Luftturbine zugeführt, wo dieser expandiert und dabei mechanische bzw. elektrische Energie erzeugt. Die bis typischerweise etwa 130 °C bis 140 °C im Wärmetauschprozess abgekühlte verdichtete Luft wird als Kühlluft der Gasturbine zugeführt. Die Verwendung des Aufgewärmten Luftstroms zum Antreiben einer Luftturbine führt zu einer Erzeugung zusätzlicher Energie, die ihrerseits zu einer weiteren Steigerung des Wirkungsgrads beiträgt.

Die auf eine Gasturbinenanlage gerichtete Aufgabe wird erfindungsgemäß gelöst durch eine Gasturbinenanlage, insbesondere zur Durchführung des vorstehend beschriebenen Verfahrens, mit einer Gasturbine und einem der Gasturbine vorgeschalteten Verdichter, wobei von dem Verdichter mindestens eine Kühlluftleitung abzweigt, über die dem Verdichter verdichtete Luft entnehmbar und der Gasturbine als Kühlluft zuführbar ist, wobei in die Kühlluftleitung ein Luft-Luft-Wärmetauscher primärseitig geschaltet ist, der sekundärseitig an eine Leitung angeschlossen ist, über die der Wärmetauscher mit einem Luftstrom durchströmbar ist.

Durch dieses neuartige Schaltungskonzept einer Gasturbinenanlage ist eine besonders effiziente Kühlung der thermisch hochbelasteten Komponenten der Gasturbine erreicht. Die dem der Gasturbine vorgeschalteten Verdichter entnommene verdichtete Luft wird in dem Luft-Luft-Wärmetauscher durch die primärseitige Schaltung abgekühlt. Der sekundärseitig den Luft-Luft-Wärmetauscher über die Leitung durchströmende Luftstrom nimmt Wärme der verdichteten Luft auf, wodurch sich die Temperatur des Luftstroms erhöht.

In einer bevorzugten Ausgestaltung ist stromauf des Wärmetauschers die Leitung an eine Entnahmestelle eines Luftverdichters zur Entnahme des Luftstroms angeschlossen.

Der Luftverdichter ist dabei vorteilhafterweise ein von dem der Gasturbine vorgeschalteten Verdichter unabhängiger Luftverdichter, der zur Bereitstellung des Luftstroms dient. Die Entnahmestelle des Luftstroms ist je nach gewünschtem Druck- und Temperaturniveau des Luftstroms wählbar.

In einer besonders bevorzugten Ausgestaltung mündet stromab des Wärmetauschers die Leitung in eine dem Luftverdichter nachgeschaltete Luftturbine ein. Auf diese Weise ist der im Wärmetauscher aufgewärmte Luftstrom zum Antreiben der Luftturbine nutzbar und zusätzlich Energie erzeugbar, beispielsweise indem die Luftturbine einen elektrischen Generator antreibt. Die Luftturbine treibt dabei vorteilhafterweise auch den Luftverdichter an, aus dem der Luftstrom zur Abkühlung der verdichteten Luft aus dem Verdichter der Gasturbine entnommen wird.

Es ist auch möglich, dass mehrere Luft-Luft-Wärmetauscher vorgesehen sind, beispielsweise zwei, an die primärseitig eine Kühlluftleitung und sekundärseitig eine Leitung angeschlossen ist. So kann beispielsweise eine erste Kühlluftleitung an einer ersten Druckstufe des Verdichters der Gasturbine abzweigen und eine zweite Kühlluftleitung von einer zweiten, von der ersten Druckstufe verschiedenen, Druckstufe abzweigen. Entsprechend zweigt eine erste Leitung an einer ersten Stufe des der Luftturbine zugeordneten Luftverdichters ab und eine zweite Leitung an einer zweiten Stufe des Luftverdichters. Die erste Kühlluftleitung und die erste Leitung sind dabei an einen ersten Luft-Luft-Wärmetauscher angeschlossen und die zweite Kühlluftleitung und die zweite Leitung an einen zweiten Luft-Luft-Wärmetauscher, so dass Kühlluft mit einem unterschiedlichen Druck- und/oder Temperaturniveau zur Kühlung der Gasturbine verfügbar ist. Durch dieses Schaltungskonzept kann eine besonders effiziente und an die Kühlerfordernisse angepasste Beaufschlagung der Gasturbine mit Kühlluft erreicht werden.

Weitere Vorteile der Gasturbinenanlage ergeben sich in analoger Weise zu den weiter oben beschriebenen Vorteile des Verfahrens zur Kühlung einer Gasturbine.

Das Verfahren zur Kühlung einer Gasturbine sowie die Gasturbinenanlage werden beispielhaft anhand der in der Zeichnung dargestellten Ausführungsbeispiele näher erläutert. Es zeigen hierbei teilweise schematisch und vereinfacht:
- FIG 1: einen Halbschnitt durch eine Gasturbine mit Verdichter, Brennkammer und Turbine,
- FIG 2: eine Gasturbinenanlage gemäß der Erfindung.

Gleiche Bezugszeichen haben in den Figuren jeweils gleiche Bedeutung.

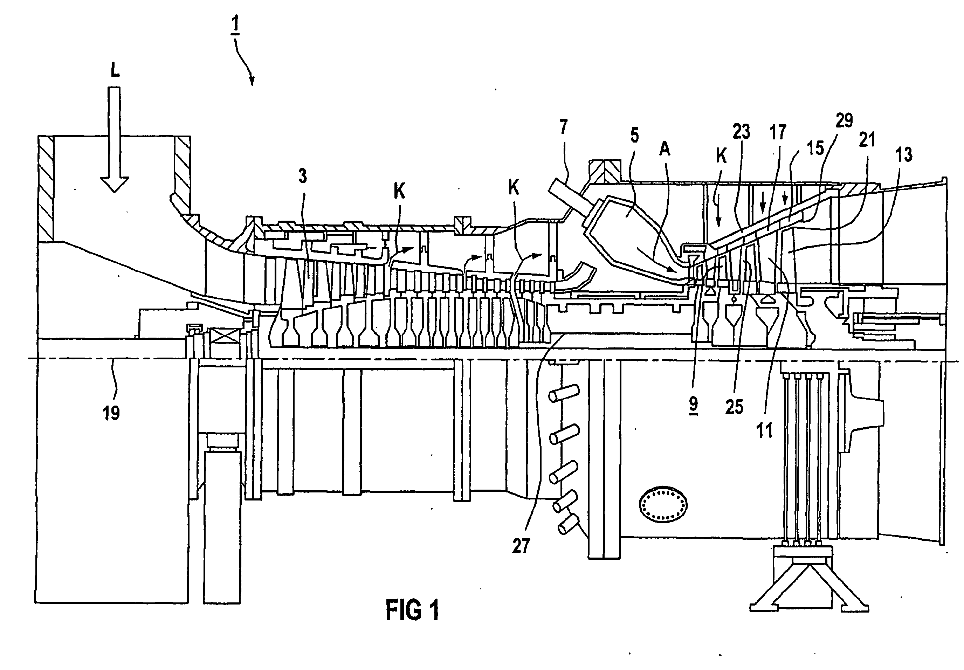

In FIG 1 ist ein Halbschnitt durch eine Gasturbine 1 dargestellt. Die Gasturbine 1 weist einen Verdichter 3 für Verbrennungsluft, eine Brennkammer 5 mit Brennern 7 für einen flüssigen oder gasförmigen Brennstoff sowie eine Turbine 9 zum Antrieb des Verdichters 3 und eines in FIG 1 nicht dargestellten Generators auf. In der Turbine 9 sind feststehende Leitschaufeln 11 und rotierbare Laufschaufeln 13 auf jeweiligen, sich radial erstreckenden, im Halbschnitt nicht näher gezeigten Grenzen entlang der Rotationsachse 19 der Gasturbine 1 angeordnet. Dabei wird ein entlang der Rotationsachse 19 aufeinander folgendes Paar aus einem Kranz von Leitschaufeln 11 (Leitschaufelkranz) und einem Kranz von Laufschaufeln 13 (Laufschaufelkranz) als Turbinenstufe bezeichnet. Jede Leitschaufel 11 weist eine Plattform 17 auf, welche zur Fixierung der betreffenden Leitschaufel 11 am inneren Turbinengehäuse 23 angeordnet ist. Die Plattform 17 stellt dabei ein Wandelement in der Turbine 9 dar. Die Plattform 17 ist ein thermisch stark belastetes Bauteil, welche die äußere Begrenzung eines heißen Aktionsfluids A, insbesondere des Heißgaskanals 25 in der Turbine 9 bildet. Die Laufschaufel 13 ist auf dem entlang der Rotationsachse 19 der Gasturbine 1 angeordneten Turbinenläufer befestigt. Ein Führungsring 15 ist als Wandelement in der Gasturbine 1 zwischen den Plattformen 17 zweier axial beabstandeter, benachbarter Leitschaufeln 11 angeordnet. Der Führungsring 15 sowie die Plattform 17 der Leitschaufel 11 weisen jeweils eine Heißseite 29 auf, die im Betrieb der Gasturbine 1 im heißen Aktionsfluid A, insbesondere dem Heißgas ausgesetzt ist. Die Heißseite 29 des Führungsrings 15 ist dabei in radialer Richtung vom äußeren Ende 21 der Laufschaufel 13 durch einen Spalt beabstandet.

Die Plattform 17 der Leitschaufel 11 und der axial daran angrenzende Führungsring 15 sind jeweils kühlbare Wandelemente, die zur Kühlung mit einem Kühlmittel K beaufschlagt werden. Im Betrieb der Gasturbine 1 wird Frischluft L aus der Umgebung angesaugt. Die Luft L wird im Verdichter 3 verdichtet und dadurch gleichzeitig vorgewärmt. In der Brennkammer 5 wird die Luft L mit dem flüssigen oder gasförmigen Brennstoff zusammengebracht und verbrannt. Ein zuvor dem Verdichter 3 aus geeigneten Entnahmen entnommener Teil der Luft L dient als Kühlluft K zur Kühlung der Turbine 9, insbesondere der Turbinenstufen. Hierbei wird z.B. die erste Turbinenstufe mit einer Turbineneintrittstemperatur von etwa 750 °C bis 1200 °C mit heißem Aktionsfluid A, dem Heißgas, beaufschlagt. In der Turbine 9 erfolgt eine Entspannung und Abkühlung des heißen Aktionsfluids A, insbesondere des Heißgases, welches durch die Turbinenstufen strömt.

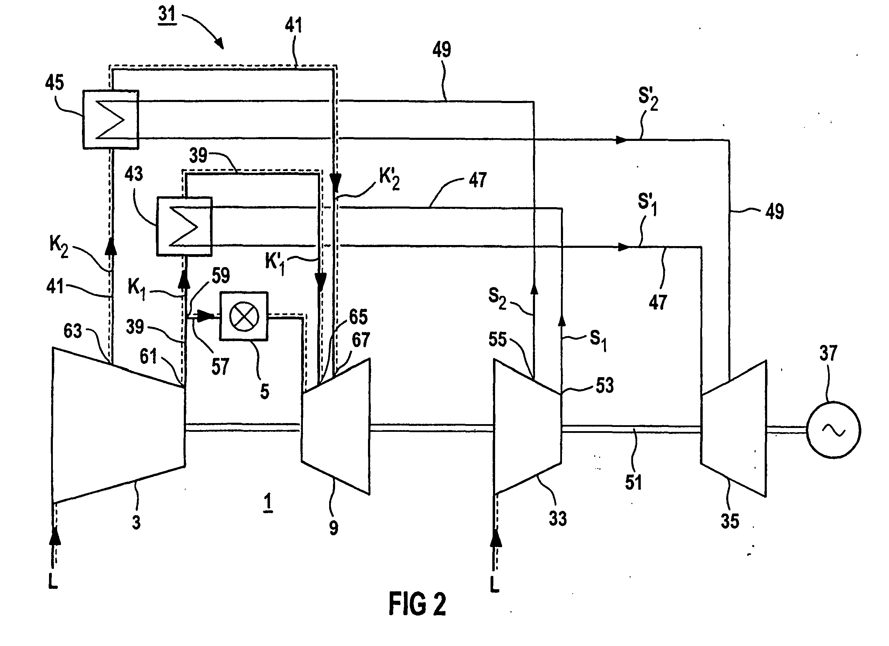

FIG 2 zeigt das Schaltungskonzept einer Gasturbinenanlage 31 gemäß der Erfindung. Die Gasturbinenanlage 31 weist hierbei eine Gasturbine 1 auf. Die Gasturbine 1 umfasst eine Turbine 9 sowie einen der Turbine 9 vorgeschalteten Verdichter 3 sowie eine Brennkammer 5 zur Verbrennung eines Brennstoffs. Weiter umfasst die Gasturbinenanlage 31 eine Luftturbine 35. sowie einen der Luftturbine 35 zugeordneten und dieser vorgeschalteten Luftverdichter 33. Die Gasturbine 1, die Luftturbine 35 sowie der Luftverdichter 33 sind auf einer gemeinsamen Welle 51 angeordnet. Zur Erzeugung elektrischer Energie weist die Gasturbinenanlage 31 einen Generator 37 auf, der über die Welle 51 antreibbar ist. Von dem Verdichter 3 zweigt eine Kühlluftleitung 39 an einer Kühlluftentnahmestelle 61 ab. Eine weitere Kühlluftleitung 41 zweigt von einer weiteren Kühlluftentnahmestelle 63 des Verdichters 3 ab.

Von dem der Luftturbine 35 zugeordneten Luftverdichter 33 zweigt eine Leitung 47 und eine weitere Leitung 49 ab, wobei die Leitung 47 an einer Entnahmestelle 53 und die weitere Leitung 49 an einer Entnahmestelle 55 des Luftverdichters 33 angeschlossen ist. In die Kühlluftleitung 39,41 ist ein Luft-Luft-Wärmetauscher 43, 45 primärseitig geschaltet. Sekundärseitig ist der Wärmetauscher 43, 45 an die Leitung 47, 49 angeschlossen, über die der Wärmetauscher 43, 45 mit einem Luftstrom S₁, S₂ durchströmbar ist. In Strömungsrichtung des. Luftstroms S₁, S₂ betrachtet ist stromauf des Wärmetauschers 43, 45 die Leitung 47, 49 an eine jeweilige Entnahmestelle 53, 55 des Luftverdichters 33 zur Entnahme des Luftstroms S₁, S₂ angeschlossen. Stromab des Wärmetauschers 43, 45 mündet die Leitung 47, 49 in die dem Luftverdichter 33 nachgeschaltete Luftturbine 33 ein. In Strömungsrichtung der verdichteten Luft K₁, K₂ betrachtet mündet stromab des Wärmetauschers 43, 45 die Kühlluftleitung 39, 41 in die Turbine 9, wobei jeweils ein thermisch belasteter Bereich 65, 67 der Gasturbine 1 kühlbar ist.

Die Kühlluftleitung 39 ist der höchsten Verdichterstufe des Verdichters 3 zugeordnet, so dass über die Kühlluftentnahmestelle 61 entsprechend hoch verdichtete Luft K₁ entnehmbar ist. Von der Kühlluftleitung 39 zweigt eine Zweigleitung 57 ab, die an die Brennkammer 5 angeschlossen ist. Über die Zweigleitung 57 ist Verbrennungsluft der Brennkammer 5 zur Verbrennung eines flüssigen oder gasförmigen Brennstoffs zuführbar. Nach der Verbrennung werden die heißen Verbrennungsgase der Turbine 9 zugestellt, wobei z.B. die erste Turbinenstufe mit einer Turbineneintrittstemperatur von etwa 750 °C bis 1200 °C beaufschlagt ist. In der Turbine 9 erfolgt eine Entspannung und Abkühlung des Heißgases, welches durch die Turbinenstufen strömt (vgl. FIG 1).

Im Betrieb der Gasturbine 1 wird Frischluft L aus der Umgebung angesaugt. Die Luft L wird im Verdichter 3 verdichtet und dadurch gleichzeitig vorgewärmt. Im Verdichter verdichtete Luft K₁, K₂ wird dem Verdichter 3 an einer Kühlluftentnahmestelle 61, 63 entnommen. Die Kühlluftentnahmestelle 63 entspricht hierbei einer geringeren Verdichtung der Luft L. Die verdichtete Luft K₁, K₂ wird über die Kühlluftleitungen 39, 41 den Wärmetauschern 43, 45 primärseitig zugestellt. Die verdichtete Luft K₁, K₂ wird im Wärmetausch mit dem Luftstrom S₁, S₂ abgekühlt. Anschließend wird die abgekühlte verdichtete Luft K₁', K₂' der Gasturbine 1 zur Kühlung thermisch belasteter Bereiche 65, 47 zugeführt. Durch den Wärmetauscherprozess im Luft-Luft-Wärmetauscher 43, 45 wird der sekundärseitig dem Wärmetauscher 43, 45 zugestellte Luftstrom S₁, S₂ aufgewärmt. Der aufgewärmte Luftstrom S₁', S₂' wird der Luftturbine 35 zugeführt und dort arbeitsleistend entspannt.

Die Erfindung zeichnet sich insbesondere dadurch aus, dass in einer Gasturbinenanlage 31 einer Gasturbine 1 eine Luftturbine 35 sowie ein Luft-Luft-Wärmetauscher 43, 45 zugeschaltet werden. Der Luftturbine 3 ist dabei vorteilhafterweise ein Luftverdichter 33 zugeordnet, über die ein verdichteter Luftstrom S₁, S₂ zu den Wärmetauschern 43, 45 sekundärseitig weitergeleitet wird. Der Maximaldruck des dem Luftverdichter 33 entnommenen Luftstroms S₁, S₂ beträgt typischerweise etwa 2 bis 2,5 bar. Die Temperatur des Luftstroms S₁, S₂ vor dem Wärmetauschprozess beträgt beispielsweise 100 bis 110 °C. In den Wärmetauscher 43, 45 wird verdichtete Luft K₁, K₂ aus dem Verdichter 3 der Gasturbine 1 abgekühlt und der Luftstrom S₁, S₂ aufgewärmt. Der auf diese Weise aufgewärmte Luftstrom S₁', S₂' wird der Luftturbine 35 zugeführt, wo dieser expandiert und dabei mechanische bzw. elektrische Energie über den an die Luftturbine 35 angekoppelten Generator 37 erzeugt. Die auf etwa 120 °C bis 150 °C abgekühlte verdichtete Luft K₁', K₂' wird über eine jeweilige Kühlluftleitung 39, 41 der Turbine 9 zur Kühlung zugestellt.

Mit der Erfindung werden wesentlich niedrigere Temperaturen der zur Kühlung einer Gasturbine 1 verwendeten Kühlluft K₁', K₂' erreicht. Hierdurch ist es einerseits möglich den Einsatz an Kühlluft, d.h. den dem Verdichter 3 entnommenen KühlluftMassenstrom, zu reduzieren oder andererseits die Eintrittstemperatur von heißem Gas in die Turbine 9 zu erhöhen. Beide Maßnahmen führen vorteilhafterweise zu einer Wirkungsgradsteigerung der Gasturbinenanlage 31. Zusätzlich trägt die in der Luftturbine 35 erzeugte Energie ihrerseits zur Wirkungsgraderhöhung bei.

## Patentansprüche

1. Verfahren zur Kühlung einer Gasturbine (1), bei dem einem der Gasturbine (1) vorgeschalteten Verdichter (3) verdichtete Luft (K₁, K₂) entnommen und im Wärmetausch mit.einem von einem Luftverdichter (33) bereitgestellte Luftstrom (S₁, S₂) abgekühlt und der Gasturbine (1) als abgekühlte Kühlluft (K) zugeführt wird,
**dadurch gekennzeichnet, dass** der beim Wärmetausch aufgewärmte Luftstrom (S₁' , S₂') einer Luftturbine (35) zugeführt und dort arbeitsleistend entspannt wird, wobei der Luftstrom (S₁, S₂, S₁', S₂') strömungstechnisch unabhängig von der verdichteten Luft (K₁, K₂, K₁', K₂') geführt wird.

2. Verfahren nach Anspruch 1,
**dadurch gekennzeichnet, dass** die verdichtete Luft (K₁, K₂) im Wärmetausch auf 120 °C bis 150 °C, insbesondere auf 130 °C bis 140 °C, abgekühlt wird.

3. Verfahren nach Anspruch 1 oder 2,
**dadurch gekennzeichnet, dass** für den Wärmetausch ein Luftstrom (S₁, S₂) mit einer Temperatur von 90 °C bis 115°C, insbesondere von 100 °C bis 110 °C, eingesetzt wird.

4. Verfahren nach einem der vorhergehenden Ansprüche,
**dadurch gekennzeichnet, dass** für den Wärmetausch ein Luftstrom (S₁, S₂) mit einem Maximaldruck von 2 bar bis 3 bar, insbesondere von 2 bar bis 2,5 bar, verwendet wird.

5. Gasturbinenanlage (31), insbesondere zur Durchführung des Verfahrens nach einem der Ansprüche 1 bis 4, mit einer Gasturbine (1) und einem der Gasturbine (1) vorgeschalteten Verdichter (3), wobei von dem Verdichter (3) mindestens eine Kühlluftleitung (39,41) abzweigt, über die dem Verdichter (3) verdichtete Luft (K₁, K₂) entnehmbar und der Gasturbine als Kühlluft (K) zuführbar ist,
wobei in die Kühlluftleitung (39, 41) ein Luft-Luft-Wärmetauscher (43, 45) primärseitig geschaltet ist, der sekundärseitig mittels einer Leitung (47, 49) an einen Luftverdichter (33) angeschlossen ist,
**dadurch gekennzeichnet, dass** der Wärmetauscher (43, 45) und eine Luftturbine (35) mit einem vom Luftverdichter (33) bereitgestellten Luftstrom (S₁, S₂) durchströmbar ist, wobei die Führung des Luftstroms (S₁, S₂, S₁', S₂') strömungstechnisch unabhängig von der verdichteten Luft (K₁, K₂, K₁', K₂') ist.

## Claims

1. Method for cooling a gas turbine (1), in which compressed air (K₁, K₂) is extracted from a compressor (3) preceding the gas turbine (1) and is cooled in heat exchange with an air stream (S₁, S₂) provided by an air compressor (33) and is supplied as cooled cooling air (K) to the gas turbine (1), **characterized in that** the air stream (S₁', S₂',) heated during heat exchange is supplied to an air turbine (35) and is expanded there so as to perform work, the air stream (S₁, S₂, S₁', S₂') being guided, in flow terms, independently of the compressed air (K₁, K₂, K₁' , K₂').

2. The method according to Claim 1, **characterized in that** the compressed air (K₁, K₂) is cooled in heat exchange to 120°C to 150°C, in particular to 130°C to 140°C.

3. Method according to Claim 1 or 2, **characterized in that** an air stream (S₁, S₂) having a temperature of 90°C to 115°C, in particular of 100°C to 110°C, is used for the heat exchange.

4. Method according to one of the preceding claims, **characterized in that** an air stream (S₁, S₂) having a maximum pressure of 2 bar to 3 bar, in particular of 2 bar to 2.5 bar, is used for the heat exchange.

5. Gas turbine plant (31), in particular for carrying out the method according to one of Claims 1 to 4, with a gas turbine (1) and with a compressor (3) preceding the gas turbine (1), the compressor (3) having branching off from it at least one cooling-air line (39, 41), via which compressed air (K₁, K₂) can be extracted from the compressor (3) and can be supplied as cooling air (K) to the gas turbine, the cooling-air line (39, 41) having connected into it on the primary side an air/air heat exchanger (43, 45) which is connected on the secondary side to an air compressor (33) via a line (47, 49), **characterized in that** an air stream (S₁, S₂) provided by the air compressor (33) can flow through the heat exchanger (43, 45) and an air turbine (35), the air stream (S₁, S₂, S₁', S₂') being guided, in flow terms, independently of the compressed air (K₁, K₂, K₁', K₂').

## Revendications

1. Procédé de refroidissement d'une turbine (1) à gaz, dans lequel on prélève de l'air (K₁, K₂) comprimé d'un compresseur (3) monté en amont de la turbine (1) à gaz et on le refroidit par un échange de chaleur avec un courant (S₁, S₂) d'air procuré par un compresseur (33) d'air et on l'envoie en tant qu'air (K) de refroidissement refroidi à la turbine (1) à gaz,
**caractérisé en ce que** le courant (S₁', S₂') d'air réchauffé dans l'échange de chaleur est apporté à une turbine (35) à air et y est détendu en fournissant du travail, le courant (S₁, S₂, S₁', S₂') d'air étant guidé du point de vue de la technique des fluides indépendamment de l'air (K₁, K₂, K₁', K₂') comprimé.

2. Procédé suivant la revendication 1,
**caractérisé en ce que** l'on refroidit l'air (K₁, K₂) comprimé par échange de chaleur jusqu'à 120°C à 150°C, notamment jusqu'à 130°C à 140°C.

3. Procédé suivant la revendication 1 ou 2,
**caractérisé en ce que** l'on utilise pour l'échange de chaleur un courant (S₁, S₂) d'air ayant une température de 90°C à 115°C, notamment de 100°C à 110°C.

4. Procédé suivant l'une des revendications précédentes,
**caractérisé en ce que** l'on utilise pour l'échange de chaleur un courant (S₁, S₂) d'air ayant une pression maximum de 2 bars à 3 bars, notamment de 2 bars à 2,5 bars.

5. Installation (31) de turbine à gaz, notamment pour la mise en oeuvre du procédé suivant l'une des revendications 1 à 4, comprenant une turbine (1) à gaz et un compresseur (3) monté en amont de la turbine (1) à gaz, au moins un conduit (39, 41) d'air de refroidissement partant en dérivation du compresseur (3), de l'air (K₁, K₂) comprimé par le compresseur (3) pouvant en être prélevé et envoyé à la turbine à gaz en tant qu'air (K) de refroidissement,
un échangeur de chaleur (43, 45) air-air étant monté côté primaire dans le conduit (39, 41) d'air de refroidissement et étant raccordé côté secondaire au moyen d'un conduit (47, 49) à un compresseur (33) d'air,
**caractérisée en ce que** l'échangeur de chaleur (43, 45) et une turbine (35) à air peuvent être parcourus par un courant (S₁, S₂) d'air mis à disposition par le compresseur (33) d'air, le guidage du courant (S₁, S₂, S₁', S₂') d'air étant, du point de vue de la technique des fluides, indépendant de celui de l'air (K₁, K₂, K₁" K₂') comprimé.
